# EUROPÄISCHE PATENTSCHRIFT

(11) **EP 2 902 151 B1**
(45) Veröffentlichungstag und Bekanntmachung des Hinweises auf die Patenterteilung: **20.09.2017**
(21) Anmeldenummer: 15152691.0
(22) Anmeldetag: 27.01.2015
(51) Int. Cl.: B23Q 1/48, B23Q 1/01

(54) **Profilbearbeitungsmaschine**
Profile processing machine
Machine d'usinage de profilé

(30) Priorität: 29.01.2014 DE 102014201583
(43) Veröffentlichungstag der Anmeldung: 05.08.2015
(73) Patentinhaber: elumatec AG, 75417 Mühlacker (DE)
(72) Erfinder: Schmidt, Volker, 71665 Vaihingen-Enzweihingen (DE)
(74) Vertreter: Patentanwälte Ruff, Wilhelm, Beier, Dauster & Partner mbB

(56) Entgegenhaltungen:
- EP-A2- 1 166 952
- DE-A1- 10 023 916
- DE-U- 7 515 182
- FR-A5- 2 159 777
- US-A- 5 661 892

## Beschreibung

Die Erfindung betrifft eine Profilbearbeitungsmaschine mit einem Maschinenrahmen, einem langgestreckten Bearbeitungstisch zum Auflegen eines zu bearbeitenden Profils und einem Werkzeugträger, wobei der Werkzeugträger entlang dem Bearbeitungstisch verschiebbar ist.
Aus der US-Patentschrift US 5,661,892 A ist eine Bearbeitungsmaschine mit einem Maschinenrahmen, einem langgestreckten Bearbeitungstisch zum Auflegen eines Werkstücks und einem Werkzeugträger bekannt, wobei der Maschinenrahmen mehrere voneinander beabstandende Stützen und mehrere, die Stützen miteinander verbindende Träger aufweist. Der Bearbeitungstisch erstreckt sich zwischen den Stützen. Der Werkzeugträger ist ringabschnittsförmig ausgebildet und umgibt in Längsrichtung des Bearbeitungstisches gesehen den Bearbeitungstisch über einen Winkelbereich von 180°. Die Bearbeitungsmaschine ist zur Bearbeitung von Flugzeugrümpfen vorgesehen, die abschnittsweise eine kreiszylindrische Form haben, sich aber auch in Längsrichtung gesehen verjüngen.
Aus der französischen Patentschrift FR 2 159 777 A5 ist eine Bearbeitungsmaschine gezeigt, bei der ein Werkzeug auf einer ringförmigen Bahn angeordnet ist. Die ringförmige Bahn ist an einem feststehenden Kreisring angeordnet. Ein zu bearbeitendes Werkstück wird im Zentrum des Kreisrings angeordnet.
Aus dem deutschen Gebrauchsmuster DE 75 15 182 U ist eine Bohr- oder Fräsmaschine bekannt, die einen schräg zu einer Bodenoberfläche angeordneten Werkstücktisch aufweist. Auch ein Werkzeugträger ist schräg zur Bodenoberfläche und damit parallel zur Werkstückauflage angeordnet.
Aus der deutschen Offenlegungsschrift DE 100 23 916 A1 ist ein Maschinentisch bekannt, der mehrere Werkstückträger aufweist, die mittels eines Transportbandes in Längsrichtung des Bearbeitungstisches verschoben werden können.
Mit der Erfindung soll eine Profilbearbeitungsmaschine insbesondere hinsichtlich ihrer Zugänglichkeit für einen Bediener und hinsichtlich einer Bearbeitungsgeschwindigkeit verbessert werden.
Erfindungsgemäß ist hierzu eine Profilbearbeitungsmaschine mit einem Maschinenrahmen, einem langgestreckten Bearbeitungstisch zum Auflegen eines zu bearbeitenden Profils und einem Werkzeugträger vorgesehen, wobei der Werkzeugträger entlang dem Bearbeitungstisch verschiebbar ist, wobei der Maschinenrahmen wenigstens zwei voneinander beabstandete Stützen und wenigstens einen die beiden Stützen verbindenden Träger aufweist und sich der Bearbeitungstisch zwischen den beiden Stützen erstreckt, wobei der Werkzeugträger ringförmig ausgebildet ist und in Längsrichtung des Bearbeitungstisches gesehen den Bearbeitungstisch vollständig umgibt.

Durch die erfindungsgemäße Ausgestaltung einer Profilbearbeitungsmaschine ist der Bearbeitungstisch für einen Bediener wesentlich besser zugänglich, da der Bediener bis unmittelbar an den Bearbeitungstisch gelangen kann, um ein Profil aufzulegen. Dies deshalb, da eine Längsführung für den Werkzeugträger entweder unterhalb, auf einer dem Bediener abgewandten Seite des Bearbeitungstisches und/oder an dem die Stützen verbindenden Träger des Maschinenrahmens vorgesehen sein kann. Auch während der Bearbeitung ist das Profil durch die erfindungsgemäße Ausgestaltung in der Profilbearbeitungsmaschine für Werkzeuge auf dem Werkzeugträger besser zugänglich. Der Werkzeugträger selbst kann durch die ringförmige oder ringabschnittsförmige Konfiguration mit geringen Massen ausgebildet werden. Die Werkzeuge selbst sind vorteilhafterweise entlang dem Werkzeugträger verschiebbar. Durch die ringförmige oder ringabschnittsförmige Konfiguration des Werkzeugträgers ergeben sich kurze Verfahrwege für die Werkzeuge und damit kurze Bearbeitungszykluszeiten. Ein Antrieb des Werkzeugträgers kann auf verschiedenste Art und Weise bewirkt werden.

Da der Werkzeugträger ringförmig ausgebildet ist und den Bearbeitungstisch in Längsrichtung des Bearbeitungstisches vollständig umgibt, kann der Werkzeugträger zum einen sehr stabil ausgebildet werden, um eine hohe Bearbeitungspräzision sicherzustellen. Zum anderen ist durch die ringförmige Ausgestaltung des Werkzeugträgers der Bearbeitungstisch für einen Bediener beim Auflegen oder Entnehmen eines Profils oder eines sonstigen Werkstücks sehr gut zugänglich. Das auf dem Bearbeitungstisch aufliegende Profil bzw. Werkstück ist für die Werkzeuge auf dem Werkzeugträger bei kurzen Verfahrwegen gut zugänglich.

In Weiterbildung der Erfindung weist der Bearbeitungstisch eine gegenüber der Horizontalen gekippte Auflagefläche für ein zu bearbeitendes Profil auf.

Gerade dann, wenn die Auflagefläche gegenüber der Horizontalen zum Bediener hin gekippt ist, ergibt sich eine besonders ergonomische Ausgestaltung der erfindungsgemäßen Profilbearbeitungsmaschine, da der Bediener das Profil auf die schräge Auflagefläche einfach auflegen kann und insbesondere nicht teilweise über den Bearbeitungstisch langen muss, um ein Profil aufzulegen.

In Weiterbildung der Erfindung ist die Auflagefläche um einen Winkel im Bereich zwischen 15 Winkelgrad und 45 Winkelgrad, insbesondere 30 Winkelgrad, gegenüber der Horizontalen gekippt.

Bei einer um einen solchen Winkel gekippten Auflagefläche ergibt sich als weiterer Vorteil, dass das aufgelegte Profil im Wesentlichen selbsttätig durch die eigene Schwerkraft gegen Anschläge rutscht, die auf der tieferliegenden Seite des Auflagetisches angeordnet sind. Die Auflagefläche ist zweckmäßigerweise zum Bediener hin gekippt. Dadurch ist auch die Bearbeitung selbst bei geschlossener Schutzumhausung gut zu beobachten.

In Weiterbildung der Erfindung ist der Werkzeugträger wenigstens an dem Träger und an dem Bearbeitungstisch in Längsrichtung des Bearbeitungstisches verschiebbar gelagert.

Der Werkzeugträger ist dadurch an wenigstens zwei Punkten bzw. zwei Schlitten verschiebbar gelagert. Der Bearbeitungstisch und der Träger, der die beiden Stützen des Maschinenrahmens verbindet, sind dabei voneinander beabstandet, so dass sich eine sehr stabile Lagerung des Werkzeugträgers bei gleichzeitiger Verschiebbarkeit ergibt.

In Weiterbildung der Erfindung ist der Werkzeugträger mittels zweier voneinander beabstandeter Schienen am Träger und mittels einer Schiene am Bearbeitungstisch veschiebbar gelagert.

Auf diese Weise wird eine sichere Dreipunktlagerung des Bearbeitungstisches erreicht. Vorteilhafterweise ist eine Schiene an der Unterseite des Bearbeitungstisches vorgesehen, so dass ein Bediener bis unmittelbar an die Auflagefläche des Bearbeitungstisches herantreten kann, um ein Profil aufzulegen oder abzunehmen. Ein Bediener muss somit nicht über eine Schiene zur Führung des Werkzeugträgers hinüberlangen, da diese ja an der Unterseite des Bearbeitungstisches vorgesehen ist.

In Weiterbildung der Erfindung erstreckt sich der Bearbeitungstisch freitragend zwischen den beiden Stützen.

Auf diese Weise kann der Werkzeugträger den Bearbeitungstisch ringförmig umgeben und entlang der vollständigen Länge des Bearbeitungstisches verschoben werden. Durch die freitragende Anordnung des Bearbeitungstisches kann auch ein Bediener bis unmittelbar an den Bearbeitungstisch herantreten, um ein Profil bzw. Werkstück aufzulegen oder abzunehmen.

In Weiterbildung der Erfindung weist der Bearbeitungstisch wenigstens einen rohrartigen Träger auf, der in seinem Innenraum mit wenigstens einem Zuggurt versehen ist.

Die Ausbildung des Bearbeitungstisches mit wenigstens einem rohrartigen Träger erlaubt nicht nur einen vergleichsweise leichten und dabei äußerst stabilen Aufbau des Bearbeitungstisches. Das Vorsehen von Zuggurten ermöglicht es nicht nur, den rohrartigen Träger des Bearbeitungstisches noch weiter zu versteifen, sondern auch Toleranzen in Bezug auf die Geradlinigkeit des rohrartigen Trägers und des Bearbeitungstisches durch Einstellung der Zuggurte zu kompensieren.

In Weiterbildung der Erfindung ist der Werkzeugträger mit einem Werkzeugwechsler versehen.

Auf diese Weise kann ein Werkzeugwechsel ohne Verschiebung des Werkzeugträgers vorgesehen werden. Dies kommt kurzen Bearbeitungszeiten bei flexiblem Einsatz sehr entgegen.

In Weiterbildung der Erfindung ist ein Linearmotor zum Verschieben des Werkzeugträgers vorgesehen.

Vorteilhafterweise ist der Linearmotor auf einer Unterseite des Bearbeitungstisches angeordnet, die einer Auflagefläche für ein zu bearbeitendes Profil gegenüberliegt.

Durch diese Maßnahmen kann der Linearmotor in sehr kompakter und platzsparender Weise angeordnet werden.

Das der Erfindung zugrunde liegende Problem wird auch durch eine Profilbearbeitungsmaschine gelöst, bei der wenigstens zwei entlang dem Bearbeitungstisch verfahrbare Spanner vorgesehen sind und bei der die wenigstens zwei Spanner mittels jeweils eines Indexschiebers relativ zum Bearbeitungstisch blockiert werden können, wobei der Indexschieber den Spanner bei Überlast freigibt.

Indem die Spanner bei Überlast freigegeben werden, werden Schäden an der Profilbearbeitungsmaschine durch Überlastung vermieden. Überlastungen können beispielsweise durch eine Verschiebebewegung auftreten, die beispielweise für das Einfräsen eines Schlitzes vorgesehen ist. Ist das Werkstück verklemmt oder verkantet, kann es hier leicht zu Überbelastungen kommen, die dann entweder das Werkstück, den Werkzeugträger oder den Spanner beschädigen können. Solche Überbelastungen werden durch das erfindungsgemäße Freigeben der Spanner in den Verschieberichtungen des Werkzeugträgers vermieden. Zweckmäßigerweise weist der Indexschieber einen Indexstift auf, der mit einer V-artigen Ausnehmung am Spanner zusammenwirkt. Tritt eine Überbelastung auf, wird der Indexstift über die Schrägen der V-förmigen Vertiefung aus dieser herausgedrückt. Alternativ sind die Spanner mit eigenen Antrieben zum Verschieben ausgestattet.

Das der Erfindung zugrunde liegende Problem wird auch durch eine Profilbearbeitungsmaschine gelöst, bei der an beiden Enden eines Verfahrweges des Werkzeugträgers und/oder an beiden Seiten des Werkzeugträgers jeweils ein plastisch verformbarer Crashkörper vorgesehen ist.

Ausgehend von der Erkenntnis, dass unbeabsichtigte Anschläge des Werkzeugträgers an den Enden seines Verfahrweges äußerst selten vorkommen, wird anstelle von hydraulischen Dämpfern ein deformierbarer Crashkörper vorgesehen. Ein solcher Crashkörper kann beispielsweise aus einem Aluminiumwabenwerkstoff bestehen. Ein solcher verformbarer Crashkörper ist wesentlich leichter und günstiger als ein hydraulischer Dämpfer. Da der Crashfall ohnehin nur äußerst selten auftritt, kann das Austauschen des Crashkörpers im Schadensfall in Kauf genommen werden.

Das der Erfindung zugrunde liegende Problem wird auch durch eine Profilbearbeitungsmaschine gelöst, bei der die Spanner jeweils wenigstens zwei einander gegenüberliegende Spannflächen aufweisen, wobei Mittel vorgesehen sind, um beim Übergang vom Spannzustand zum Freigabezustand beide Spannflächen von den Außenflächen eines zu bearbeitenden Profils zu entfernen.

Auf diese Weise kann ein sogenanntes Freifahren des Profils erfolgen und die Spanner können relativ zum Profil verschoben werden, ohne dass die Gefahr besteht, dass die Oberfläche des Profils verkratzt wird. Dies ist insbesondere dann von erheblicher Bedeutung, wenn lackierte oder beschichtete Profile mit sehr empfindlichen Oberflächen bearbeitet werden sollen. Die Mittel zum Entfernen der Spannflächen von den Außenflächen eines zu bearbeitenden Profils weisen vorteilhafterweise schräg verlaufende Kulissenführungen auf, um bei einer geradlinigen Verschiebung der Kulissenführungen ein Entfernen oder Annähern beider Spannflächen gleichzeitig relativ zu dem zu bearbeitenden Profil zu bewirken.

In Weiterbildung der Erfindung weisen die Spanner jeweils eine Auflagefläche für ein zu bearbeitendes Profil auf, wobei Mittel vorgesehen sind, um beim Übergang vom Spannzustand zum Freigabezustand die Auflagefläche von den Außenflächen eines zu bearbeitenden Profils zu entfernen.

Auch hier weisen die Mittel zum Entfernen der Auflagefläche von den Außenflächen eines zu bearbeitenden Profils vorteilhafterweise Kulissenführungen auf. Ist die Auflagefläche mit einem Träger verbunden, der an seinen äußeren Enden jeweils eine schräg verlaufende Kulissenführung aufweist, wobei die beiden Kulissenführungen V-artig zueinander ausgerichtet sind, dann kann mittels einer einfachen Absenkung des Trägers ein Freifahren des zu bearbeitenden Profils erfolgen. Denn in einem solchen Fall bewegt sich nicht nur die Auflagefläche von der Unterseite des Profils weg, sondern über die Kulissenführungen können gleichzeitig die beiden Spannflächen nach außen, vom Profil weg, verschoben werden.

Das der Erfindung zugrunde liegende Problem wird auch durch eine Profilbearbeitungsmaschine gelöst, bei der in Längsrichtung des Bearbeitungstisches gesehen an wenigstens einem Ende des Bearbeitungstisches ein Anschlag für ein zu bearbeitendes Profil vorgesehen ist, wobei eine klappbare oder verschiebbare Anschlaghaube vorgesehen ist, die im nicht benutzten Zustand des Anschlags dessen Anschlagfläche abdeckt.

Durch Vorsehen einer klappbaren oder verschiebbaren Anschlaghaube kann der Anschlag im nicht benutzten Zustand auf einfache Weise gegen Verschmutzung, beispielsweise durch Späneflug, geschützt werden. Dadurch kann sichergestellt werden, dass der Anschlag bei der nächsten Benutzung sauber ist und eine Stirnfläche des Profils tatsächlich auf einer Anschlagfläche des Anschlags anliegt.

In Weiterbildung der Erfindung ist der Anschlag um 90 Winkelgrad klappbar ausgebildet und die Anschlaghaube ist über den umgeklappten Anschlag klappbar ausgebildet.

Auf diese Weise kann eine platzsparende und kompakte Anordnung geschaffen werden. Wird der Anschlag für ein zu bearbeitendes Profil nicht mehr benötigt, so wird dieser um 90° umgeklappt, wobei der Anschlag von der Seite, auf der ein zu bearbeitendes Profil liegt, weggeklappt wird. Der Anschlag liegt dann flach auf dem Bearbeitungstisch und die Anschlaghaube kann in einfacher Weise über den umgeklappten Anschlag geschoben oder geklappt werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, in den Zeichnungen dargestellten und in der Beschreibung beschriebenen Ausführungsformen lassen sich dabei in beliebiger Weise miteinander kombinieren, ohne den Rahmen der Erfindung zu überschreiten. In den Zeichnungen zeigen:
- Fig. 1: eine erfindungsgemäße Profilbearbeitungsmaschine in einer Ansicht von schräg oben,
- Fig. 2: die Profilbearbeitungsmaschine der Fig. 1 in einer weiteren Ansicht von schräg oben aus einer anderen Blickrichtung,
- Fig. 3: eine Seitenansicht der Profilbearbeitungsmaschine der Fig. 1,
- Fig. 4: eine Ansicht von der in Fig. 3 rechten Seite,
- Fig. 5: eine Ansicht in der von der in Fig. 3 linken Seite,
- Fig. 6: eine Draufsicht auf die Profilbearbeitungsmaschine der Fig. 1,
- Fig. 7: eine Ansicht eines Trägers für einen Bearbeitungstisch der Profilbearbeitungsmaschine der Fig. 1 von schräg oben,
- Fig. 8: eine abschnittsweise Darstellung der Profilbearbeitungsmaschine der Fig. 1 im Bereich eines in Fig. 1 linken Endes des Bearbeitungstisches,
- Fig. 9: eine der Fig. 8 ähnliche Darstellung, wobei ein Werkzeugträger im Zustand der Fig. 9 gegen einen Anschlag am Ende des Bearbeitungstisches verfahren wurde,
- Fig. 10: bis 13 unterschiedliche Zustände beim Verfahren, Blockieren und Freigeben eines Spanners auf dem Bearbeitungstisch der Profilbearbeitungsmaschine der Fig. 1,
- Fig. 14: eine schematische Darstellung zur Verdeutlichung der Funktionsweise eines Spanners der Profilbearbeitungsmaschine der Fig. 1 in einem ersten Zustand,
- Fig. 15: eine der Darstellung der Fig. 14 ähnliche Darstellung zur Verdeutlichung eines zweiten Zustandes des Spanners und
- Fig. 16: bis 18 verschiedene Zustände eines Anschlags am Bearbeitungstisch der Profilbearbeitungsmaschine der Fig. 1 und einer über den Anschlag klappbaren Anschlaghaube.

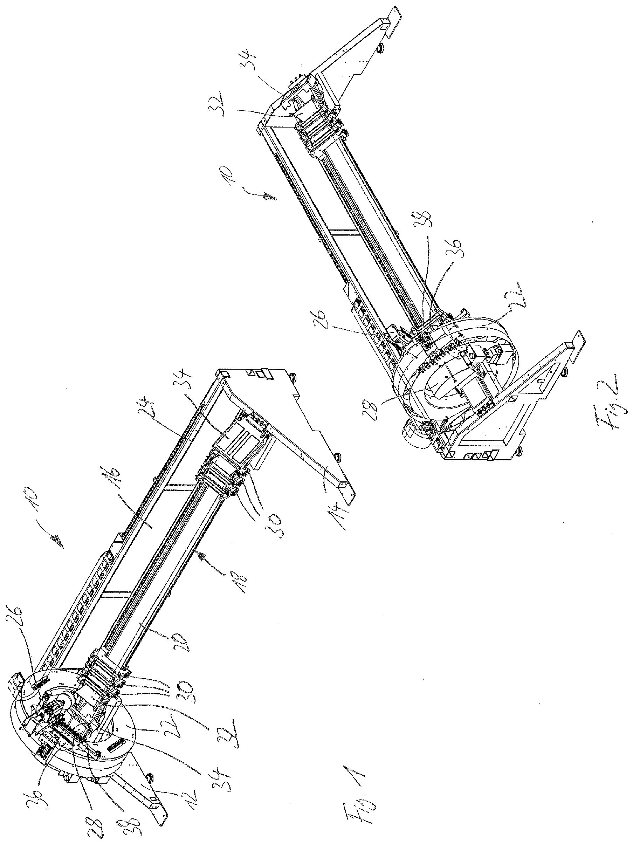

Die Darstellung der Fig. 1 zeigt eine erfindungsgemäße Profilbearbeitungsmaschine 10 von schräg oben. Die Profilbearbeitungsmaschine 10 weist einen Maschinenrahmen mit zwei seitlichen, etwa dreieckartigen Stützen 12, 14 und einen die beiden Stützen verbindenden Träger 16 auf. Die Oberkanten der beiden seitlichen Stützen 12, 14 verlaufen in einem Winkel von etwa 30° zur Horizontalen schräg nach unten, ausgehend von einer Oberseite der Stützen 12, 14, die etwa bündig mit einer Oberseite des Trägers 16 angeordnet ist. Die beiden Stützen 12, 14 und der Träger 16 bilden dadurch einen etwa U-förmigen Maschinenrahmen.

Zwischen den beiden Stützen 12, 14 ist ein Bearbeitungstisch 18 freitragend angeordnet. Der Bearbeitungstisch weist einen Rechteckrohrträger 20 auf, der mit seinen beiden Enden auf den Schrägen der Stützen 12, 14 aufliegt und dessen Oberseite damit ebenfalls um 30° zur Horizontalen gekippt ist.

Der Bearbeitungstisch 18 wird vollständig von einem ringförmigen Werkzeugträger 22 umgeben. Der Werkzeugträger 22 ist entlang dem Bearbeitungstisch 18 verschiebbar und ist hierzu an drei Schienen gelagert. Eine erste Schiene 24 ist im Bereich einer Oberseite des Trägers 16 angeordnet, eine zweite, in Fig. 1 nicht sichtbare Schiene ist im Bereich der Unterseite des Trägers 16 angeordnet und eine dritte, in Fig. 1 ebenfalls nicht sichtbare Schiene ist an der Unterseite des Bearbeitungstisches 18 angeordnet. Der Werkzeugträger 22 ist damit entlang dem Bearbeitungstisch 18 verschiebbar und dabei immer an drei Punkten stabil gelagert. Die ringförmige Ausgestaltung des Werkzeugträgers 22 erlaubt eine sehr stabile und dabei vergleichsweise leichte Ausbildung des Werkzeugträgers 22.

An dem Werkzeugträger 22 ist wenigstens ein Bearbeitungswerkzeug 26 angeordnet, beispielsweise eine Spindel, mit der Bohr- und Fräsarbeiten an einem zu bearbeitenden Profil ausgeführt werden können. Das Werkzeug 26 ist entlang dem Umfang des Werkzeugträgers 22 verschiebbar. Auf dem Werkzeugträger 22 ist darüber hinaus ein Werkzeugwechsler 28 angeordnet, so dass das Werkzeug 26 mit unterschiedlichen Werkzeugeinsätzen versehen werden kann, ohne dass der Werkzeugträger 22 hierzu relativ zum Bearbeitungstisch 18 verfahren werden muss.

Es ist in Fig. 1 zu erkennen, dass das Werkzeug 26 entlang dem Umfang des Werkzeugträgers 22 so verschoben werden kann, dass wenigstens drei Seitenflächen eines zu bearbeitenden Profils für das Werkzeug 26 zugänglich sind.

Auf dem Bearbeitungstisch 18 sind verschiebbar insgesamt 6 Spanner 30 angeordnet, um ein Profil während der Bearbeitung zu halten. Die Spanner 30 sind entlang dem Bearbeitungstisch 18 verschiebbar.

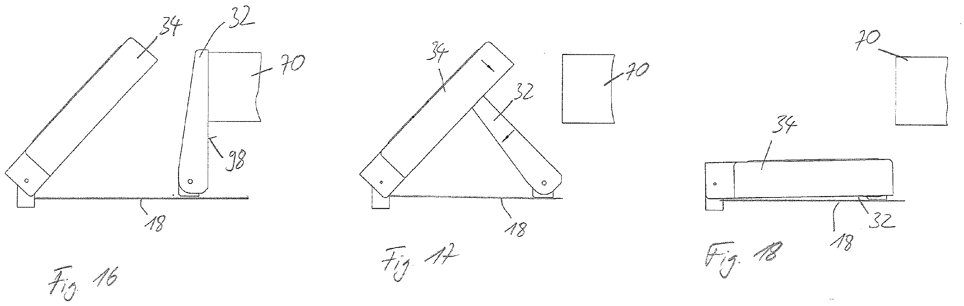

Weiter ist in Fig. 1 ein klappbarer Anschlag 32 auf dem Bearbeitungstisch 18 im Bereich des linken Endes des Bearbeitungstisches 18 zu erkennen. Der Anschlag 32 dient dazu, ein zu bearbeitendes Profil in X-Richtung, entsprechend einer Längsrichtung des Bearbeitungstisches 18, zu referenzieren, also eine definierte Lage des zu bearbeitenden Profils sicherzustellen. Wird der Anschlag 32 nicht benötigt, so kann er in Richtung auf den Bearbeitungstisch 18 geklappt werden und dann mittels einer Anschlaghaube 34 abgedeckt werden. Im Bereich des rechten Endes des Bearbeitungstisches 16 ist ein identischer Anschlag vorgesehen, der in der Darstellung der Fig. 1 nicht zu erkennen ist und der mit einer gleichartigen Anschlaghaube 34 abgedeckt werden kann, wenn er auf den Bearbeitungstisch 18 geklappt ist. Der klappbare Anschlag 32 und die Anschlaghaube 34 werden noch detailliert im Zusammenhang mit den Fig. 16, 17 und 18 erläutert.

Um die Profilbearbeitungsmaschine 10 mit einem zu bearbeitenden Profil zu bestücken, kann ein Bediener zwischen die Stützen 12, 14 treten und bis unmittelbar an die Auflagefläche des Bearbeitungstisches 18 herantreten, die durch die Auflageflächen der Spanner 30 gebildet ist.

Das Auflegen eines Profils ist hierbei in besonders ergonomischer Weise möglich, da der Bediener bis unmittelbar an die Auflageflächen herantreten kann und somit das Profil nicht über eine Begrenzung hinüberheben muss. Darüber hinaus ist die Auflagefläche genau wie der Bearbeitungstisch 18 um etwa 30° zum Bediener hin geneigt, so dass das Auflegen des Profils in der üblicherweise beim Anheben eingenommenen Winkelstellung erfolgen kann.

Die Darstellung der Fig. 2 zeigt die Profilbearbeitungsmaschine 10 der Fig. 1 ebenfalls von schräg oben, aber aus anderem Blickwinkel. In dieser Ansicht ist der in Fig. 1 rechte klappbare Anschlag 32 und die ebenfalls klappbare Anschlaghaube 34 zu erkennen.

Weiter ist zu erkennen, dass bei der dargestellten Ausführungsform lediglich ein Werkzeug 26 auf einer dem Betrachter abgewandten Seite des ringförmigen Werkzeugträgers 22 angeordnet ist. Dieses Werkzeug 26 ist, siehe auch Fig. 1, auf einem Schlitten 36 befestigt, der entlang dem Umfang des Werkzeugträgers 36 verfahren werden kann. Auf dem Schlitten 36 ist wiederum eine geradlinige Führung 39 angebracht, mit der das Werkzeug 26 auch geradlinig verschoben werden kann. Dies ist beispielsweise zweckmäßig, wenn in eine Oberseite eines zu bearbeitenden Profils ein quer zur Längsrichtung des Profils verlaufender Längsschlitz eingefräst werden soll oder wenn eine Bohrung seitlich versetzt zu einer Mittellinie eines zu bearbeitenden Profils eingebracht werden soll. Da der Schlitten 36 über den Umfang des Werkzeugträgers 22 verschiebbar ist, kann über einen Winkelbereich von wenigstens 180° jeder Punkt an den Außenflächen eines zu bearbeitenden Profils erreicht werden.

Lediglich als Kasten 28 ist in Fig. 2 der Werkzeugwechsler 38 zu erkennen, der mit dem Werkzeugträger 22 verbunden ist und mehrere Werkzeugeinsätze für das Werkzeug 26 enthält.

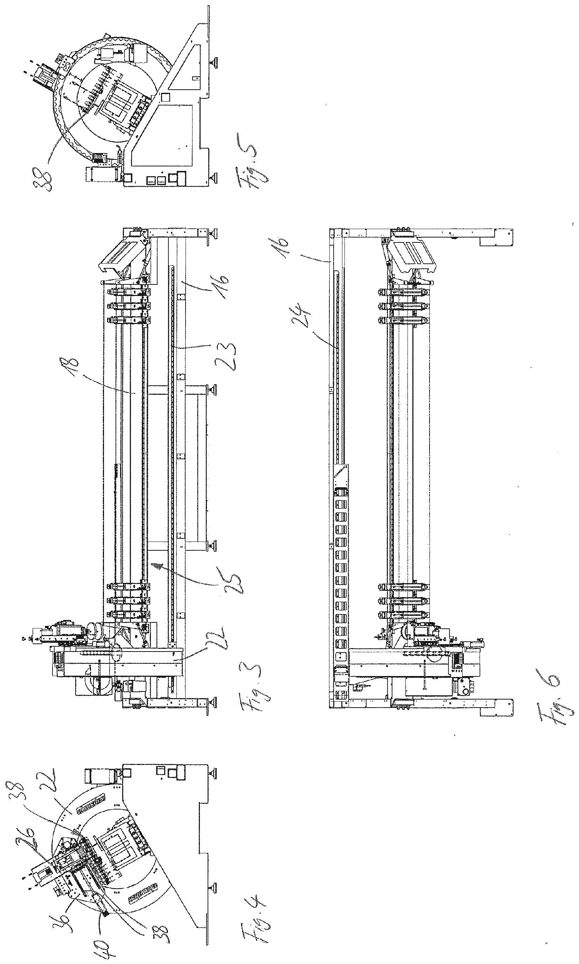

Die Darstellungen der Fig. 4 bis 6 zeigen weitere Ansichten der erfindungsgemäßen Profilbearbeitungsmaschine 10. In der Darstellung der Fig. 3 ist eine Schiene 23 zu erkennen, an der der Werkzeugträger 22 verschiebbar in Längsrichtung des Bearbeitungstisches 18 verschiebbar gehalten ist. In der Darstellung der Fig. 6 ist die Schiene 24 im Bereich der Oberseite des Trägers 16 zu erkennen, die bereits anhand der Fig. 1 erläutert wurde. Eine dritte Schiene 25 befindet sich, wie erläutert wurde, an der Unterseite des Bearbeitungstisches 18 und an der Unterseite des Bearbeitungstisches 18 ist auch ein Linearmotor vorgesehen, mit dem der Werkzeugträger 22 entlang dem Bearbeitungstisch 18 verschoben und dadurch gleichzeitig positioniert werden kann.

Die Darstellung der Fig. 4 lässt den Schlitten 36 erkennen, der entlang dem Umfang des ringförmigen Werkzeugträgers 22 verschiebbar ist. Weiter lässt Fig. 4 die Linearführung 39 erkennen, mittels der die Werkzeugspindel 26 relativ zum Schlitten 36 verschoben werden kann. Eine solche Verschiebung erfolgt mittels eines Elektromotors 40, speziell eines Brushless-Motors in Verbindung mit einer Kugelumlaufspindel" der einerseits am Schlitten 36 befestigt ist und andererseits an der Werkzeugspindel 26 angreift. In der Darstellung der Fig. 4 ist auch detaillierter als in Fig. 1 der Werkzeugwechsler 38 zu erkennen, siehe auch Fig. 5.

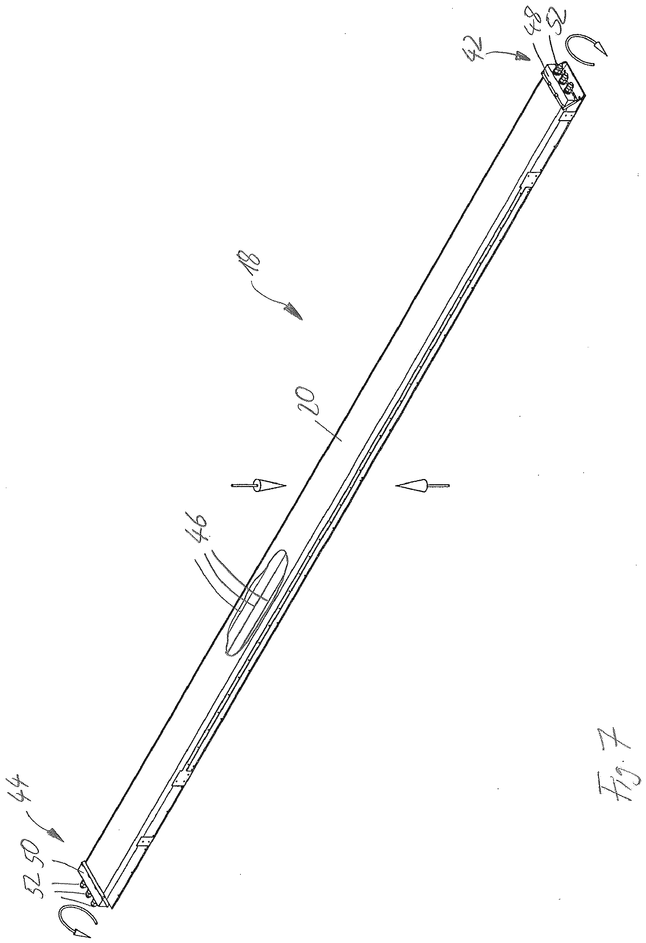

Die Darstellung der Fig. 7 zeigt den Bearbeitungstisch 18 und speziell den Träger 20 des Bearbeitungstisches 18 ohne die Spanner 30. Im Bereich seines in Fig. 7 rechten Endes 42 liegt der Träger 20 auf der in Fig. 1 rechten Stütze 14 auf und mit seinem in Fig. 7 linken Ende 44 liegt der Träger 20 auf der in Fig. 1 linken Stütze 12 auf. Der Träger 20 ist als Rechteckrohr ausgebildet und insgesamt drei, in Fig. 7 lediglich abschnittsweise angedeutete Zuggurte 46 erstrecken sich innerhalb des Trägers 20 über dessen gesamte Länge. Die Stirnseiten des Trägers 20 sind jeweils mittels Endkappen 48 bzw. 50 verschlossen und die Zuggurte 46 sind an ihren Enden mit Gewinden versehen und können dadurch mittels aufgeschraubter Muttern 52, die sich an den Endkappen 48, 50 abstützen, gespannt oder gelockert werden. Dies ist durch die gebogenen Pfeile in Fig. 7 angedeutet. Die Zuggurte 46 werden unter Spannung gesetzt und verleihen dem Träger 20 dadurch eine erhöhte Steifigkeit. Darüber hinaus ist es auch möglich, Abweichungen von der Geradlinigkeit des Trägers 20 mittels unterschiedlicher Spannung der einzelnen Zuggurte 46 zu kompensieren. Der Träger 20 kann dadurch innerhalb sehr geringer Toleranzen geradlinig ausgeführt werden. Dennoch kann der Träger 20 vergleichsweise leicht aufgebaut werden.

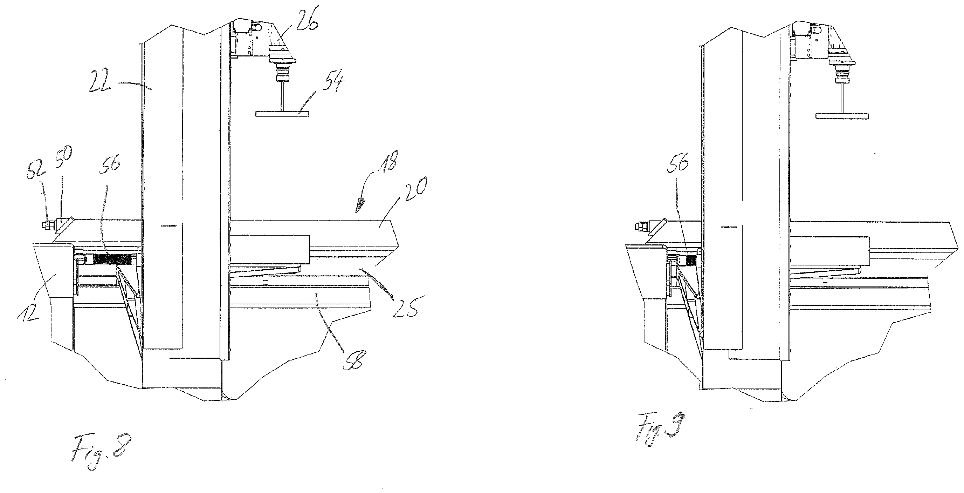

Die Darstellung der Fig. 8 zeigt die Profilbearbeitungsmaschine 10 der Fig. 1 abschnittsweise. Zu erkennen ist ein Abschnitt des Werkzeugträgers 22, sowie der Werkzeugspindel 26 und ein in die Werkzeugspindel 26 eingesetztes Werkzeug 54. Der Werkzeugträger 22 befindet sich im Bereich des linken Endes des Bearbeitungstisches 18. Die an der Unterseite des Bearbeitungstisches 18 bzw. des Trägers 20 angeordnete Schiene 25 weist an ihrem linken Ende einen deformierbaren Crashkörper 56 auf, der sich mit seinem, dem Werkzeugträger 22 abgewandten Ende an der Stütze 12 abstützt. Wird der Werkzeugträger 22 gegen den Crashkörper 56 gefahren, was lediglich im Ausnahmefall und bei fehlerhafter Ansteuerung des Linearmotors 58 auftritt, verformt sich der Crashkörper 56 und absorbiert dadurch die Aufprallenergie des Werkzeugträgers 22. Dadurch kann verhindert werden, dass der Werkzeugträger 22 oder sonstige Teile der Profilbearbeitungsmaschine 10 beschädigt werden. Der deformierte Zustand des Crashkörpers 56 ist in Fig. 9 dargestellt. Gegenüber herkömmlichen hydraulischen Dämpfern am Ende des Verfahrweges eines Werkzeugträgers sind die deformierbaren Crashkörper 56 wesentlich kostengünstiger und auch leichter. Da ein Crash des Werkzeugträgers 22 gegen ein Anschlag am Ende des Verfahrweges lediglich in Ausnahmefällen auftritt, kann hier ein deformierbarer Crashkörper 56 eingesetzt werden, der sich in einem solchen Ausnahmefall verformt und dann ausgetauscht werden muss.

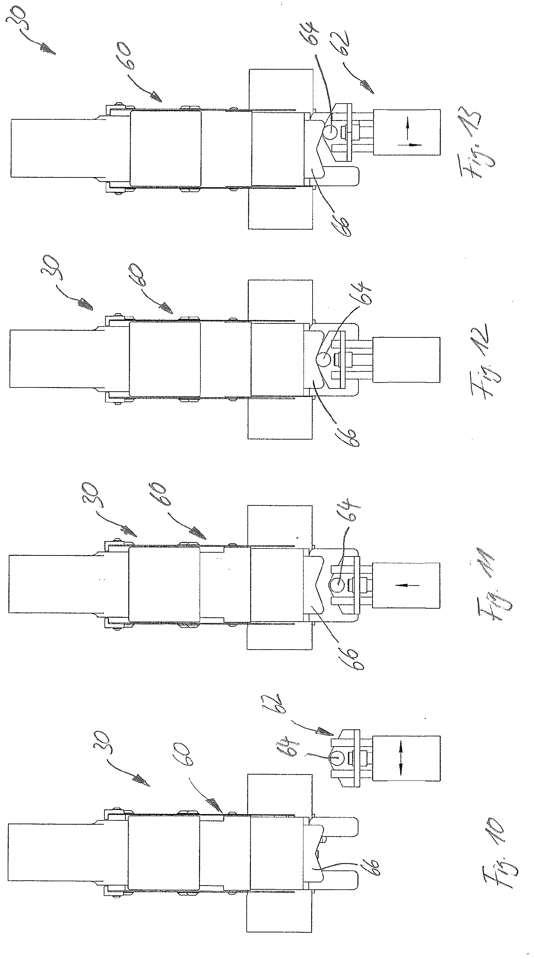

Die Darstellung der Fig. 10 zeigt einen Spanner 30, der, siehe Fig. 1, verschiebbar an dem Bearbeitungstisch 18 angeordnet ist und der eine Spannvorrichtung 60 und ein Indexbauteil 62 aufweist. Das Spannbauteil 60 ist entlang dem Bearbeitungstisch verschiebbar und auch das Indexbauteil 62 ist in einer nicht dargestellten Führung entlang dem Bearbeitungstisch 18 verschiebbar. An dem Indexbauteil 62 ist dies mittels eines Doppelpfeiles angedeutet. Das Indexbauteil 62 wird automatisch oder manuell in die durch eine übergeordnete Steuerung vorgegebene Position bewegt. Der Spanner wird dann dadurch fixiert, dass ein Indexstift 64 des Spannerbauteils 62 in Richtung auf einen Anschlag 66 mit einer, dem Indexstift 64 zugewandten V-förmigen Vertiefung zubewegt wird. Dies ist in der Fig. 11 durch einen Pfeil in Richtung auf den Anschlag 66 dargestellt.

In dem Zustand der Fig. 12 ist der Spanner 30 verriegelt und kann verfahren werden. Der Indexstift 64 drückt nun in die V-förmige Vertiefung an dem Anschlag 66 hinein. Wenn das Spannbauteil 60 beim Verfahren blockiert, wird eine Überlastung sowohl des Spannbauteils 60 als auch des Indexbauteils 62 dadurch vermieden, dass der Indexstift 64 entlang der Schrägen der V-förmigen Vertiefung am Anschlag 66 aus der V-förmigen Vertiefung herausgedrückt wird. Wenn also das Spannerbauteil 60 beim Verfahren entlang dem Bearbeitungstisch zusammen mit dem Indexbauteil 62 blockiert, so verliert das Indexbauteil 62 das Spannbauteil 60 und gibt dann ein Fehlersignal aus. Überbelastungen des Indexbauteils 62 und des Spannbauteils 60 können dadurch aber vermieden werden.

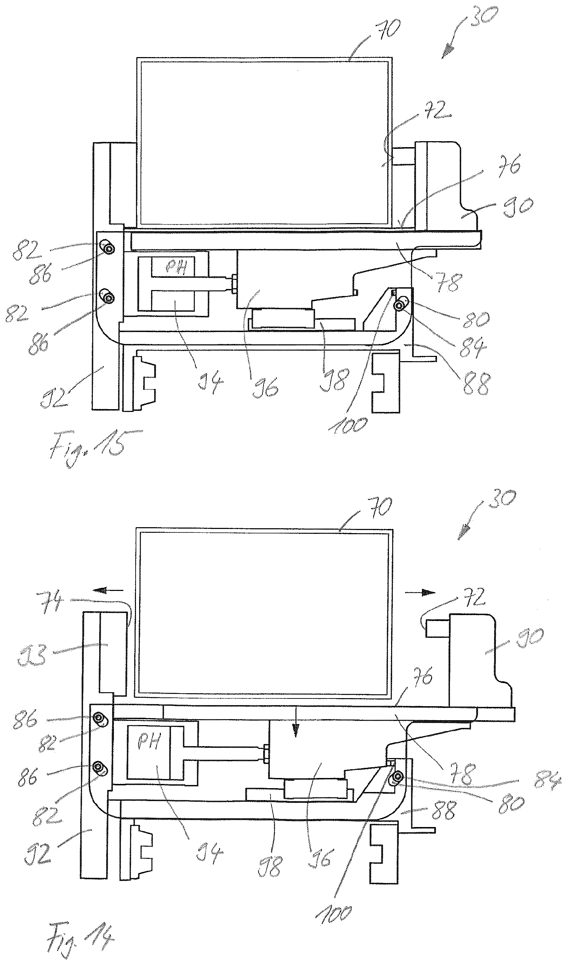

Die Darstellungen der Fig. 14 und 15 zeigen schematisch einen Spanner 30 in zwei verschiedenen Zuständen. Im Zustand der Fig. 14 ist der Spanner 30 geöffnet und hat ein zu bearbeitendes Profil 70 freigegeben. Wie zu erkennen ist, sind dabei Spannflächen 72, 74 sowie eine Auflagefläche 76 des Spanners 30 von den Außenflächen des zu bearbeitenden Profils 70 entfernt, was durch Bewegen der Spannflächen 72, 74 und der Auflagefläche 76 vom Profil 70 weg bewirkt wurde, wie in Fig. 14 durch Pfeile angedeutet ist. In diesem geöffneten Zustand kann der Spanner 30 somit entlang dem Bearbeitungstisch verfahren werden, in Fig. 14 also in die Zeichenebene hinein und aus dieser heraus, ohne dass die Gefahr besteht, dass die Spannflächen 72, 74 oder die Auflagefläche 76 die Außenseiten des Profils 70 verkratzen.

In dem Zustand der Fig. 15 ist der Spanner 30 geschlossen und die Spannflächen 72, 74 und die Auflagefläche 76 liegen an den Außenseiten des Profils 70 an. Das gleichzeitige Zustellen der beiden Spannflächen 72, 74 und der Auflagefläche 76 in Richtung auf das Profil 70 beim Spannvorgang und umgekehrt das Freifahren des Profils 70 beim Lösen des Spanners wird dadurch erreicht, dass die Auflagefläche 76 an der Oberseite eines Trägers 78 angeordnet ist, der an seinen beiden Enden jeweils eine schräg verlaufende Kulissenführungen 80, 82 aufweist. In der Seitenansicht der Fig. 14 und der Fig. 15 sind die Kulissenführungen 82 zu der Kulissenführung 80 in einem Winkel von etwa 90 Grad so angeordnet, dass sich jeweils eine nach oben, zum Profil 70 öffnende V-Anordnung ergibt. In den Kulissenführungen 80, 82 sind jeweils Kulissensteine 84 bzw. 86 geführt. Der Kulissenstein 84 ist mit einem Träger 88 verbunden, der wiederum starr mit einer Spannbacke 90 verbunden ist, an der die Spannfläche 72 angeordnet ist. Die Kulissensteine 86 sind mit einem Träger 92 verbunden, der an seinem oberen Ende eine Spannbacke 93 mit der Spannfläche 74 aufweist. Die Träger 88 und 92 sind jeweils in Seitenrichtung verschiebbar angeordnet, in der Darstellung der Fig. 14 und 15 also nach links bzw. rechts.

Wird nun ausgehend von dem geöffneten Zustand der Fig. 14 mittels eines Pneumatik- oder Hydraulikzylinders 94 und eines Hydraulikdrucks PH, die Spannbacke 90 nach links in Richtung auf das Profil 70 verschoben, so wird dadurch gleichzeitig der Träger 78 mittels des Kulissensteins 84 und der Kulissenführung 80 nach oben verschoben, so dass sich die Auflagefläche 76 ebenfalls dem Profil 70 annähert. In gleicher Weise wird der Träger 92 mittels der Kulissensteine 86 und der Kulissenführungen 82 nach rechts, in Richtung auf das Profil 70 gezogen, bis die beiden Spannflächen 72, 74 und die Auflage 76 an der jeweiligen Außenseite des Profils 70 anliegen.

Umgekehrt werden ausgehend vom geschlossenen Zustand der Fig. 15 bei einer Bewegung des Trägers 88 und der Spannfläche 72 nach rechts durch die Wirkung der Kulissenführungen 80, 82 und der Kulissensteine 84, 86 gleichzeitig der Träger 92 und die Spannfläche 74 nach links und der Träger 78 mit der Auflagefläche 76 nach unten bewegt. Der Pneumatik- oder Hydraulikzylinder 94 stützt sich dabei einerseits am Träger 92 und andererseits an einem Schlitten 96 ab, der wiederum in einer Führung 98 mit einem Endanschlag 100 am Träger 88 geführt ist.

Die Darstellung der Fig. 16, 17 und 18 zeigen verschiedene Zustände des klappbaren Anschlags 32 auf dem Bearbeitungstisch 18.

Im Zustand der Fig. 16 ist der Anschlag 32 nach oben geklappt und seine Anschlagfläche 98 nimmt einen rechten Winkel zur Oberseite des Bearbeitungstisches 18 ein. Der Anschlag 32 dient dadurch als Längenanschlag für ein zu bearbeitendes Profil 70.

Wird der Anschlag 32 nicht mehr benötigt, beispielsweise weil das Profil 70 mittels der Spanner 30 fixiert ist, wird der Anschlag 32, siehe Fig. 17, gegen den Uhrzeigersinn in Richtung auf die Oberseite des Bearbeitungstisches 18 geklappt. Gleichzeitig wird die Anschlaghaube 34 im Uhrzeigersinn ebenfalls in Richtung auf die Oberseite des Bearbeitungstisches 18 geklappt.

Im Zustand der Fig. 18 ist der Anschlag 32 vollständig umgeklappt und seine Anschlagfläche 98 wird vollständig von der Anschlaghaube 34 abgedeckt. Es besteht damit nicht die Gefahr, dass während der Bearbeitung des Profils 70 Späne auf die Anschlagfläche 98 gelangen. Dadurch bleibt die Anschlagfläche 98 sauber und kann eine zuverlässige Referenz beim Anlegen eines Profils 70 bieten.

## Patentansprüche

1. Profilbearbeitungsmaschine (10) mit einem Maschinenrahmen, einem langestreckten Bearbeitungstisch (18) zum Auflegen eines zu bearbeitenden Profils und einem Werkzeugträger (22), wobei der Werkzeugträger (22) entlang dem Bearbeitungstisch (18) verschiebbar ist, wobei der Maschinenrahmen wenigstens zwei voneinander beabstandete Stützen (12, 14) und wenigstens einen die beiden Stützen (12, 14) verbindenden Träger (16) aufweist und der Bearbeitungstisch (18) sich zwischen den beiden Stützen (12, 14) erstreckt,
und wobei der Werkzeugträger (22) ringförmig ausgebildet ist und den Bearbeitungstisch (18) in Längsrichtung des Bearbeitungstisches (18) gesehen vollständig umgibt.

2. Profilbearbeitungsmaschine nach Anspruch 1, **dadurch gekennzeichnet, dass** der Bearbeitungstisch (18) eine gegenüber der Horizontalen gekippte Auflagefläche für ein zu bearbeitendes Profil aufweist.

3. Profilbearbeitungsmaschine nach Anspruch 2, **dadurch gekennzeichnet, dass** die Auflagefläche um einen Winkel im Bereich zwischen 15 Winkelgrad und 45 Winkelgrad, insbesondere 30 Winkelgrad, gegenüber der Horizontalen gekippt ist.

4. Profilbearbeitungsmaschine nach einem der vorstehenden Ansprüche, **dadurch ; gekennzeichnet, dass** der Werkzeugträger (22) wenigstens an dem Träger (16) und an dem Bearbeitungstisch (18) in Längsrichtung des Bearbeitungstisches (18) verschiebbar gelagert ist.

5. Profilbearbeitungsmaschine nach Anspruch 4, **dadurch gekennzeichnet, dass** der Werkzeugträger (22) mittels zweier voneinander beabstandeter Schienen (23, 24) am Träger (16) und mittels einer Schiene (25) am Bearbeitungstisch verschiebbar gelagert ist.

6. Profilbearbeitungsmaschine nach einem der vorstehenden Ansprüche, **dadurch ; gekennzeichnet, dass** der Bearbeitungstisch (18) sich freitragend zwischen den beiden Stützen (12, 14) erstreckt.

7. Profilbearbeitungsmaschine nach Anspruch 6, **dadurch gekennzeichnet, dass** der Bearbeitungstisch (18) wenigstens einen rohrartigen Träger (20) aufweist, der in seinem Innenraum mit wenigstens einem Zuggurt (46) versehen ist.

8. Profilbearbeitungsmaschine nach einem der vorstehenden Ansprüche, **dadurch gekennzeichnet, dass** ein Linearmotor zum Verschieben des Werkzeugträgers (22) vorgesehen ist.

9. Profilbearbeitungsmaschine nach Anspruch 8, **dadurch gekennzeichnet, dass** der Linearmotor auf einer Unterseite des Bearbeitungstisches (18) angeordnet ist, die einer Auflagefläche für ein zu bearbeitendes Profil gegenüberliegt.

10. Profilbearbeitungsmaschine nach einem der vorstehenden Ansprüche, **dadurch gekennzeichnet, dass** wenigstens zwei entlang dem Bearbeitungstisch (18) verfahrbare Spanner (30) vorgesehen sind und dass die wenigstens zwei Spanner (30) mittels jeweils eines Indexschiebers relativ zum Bearbeitungstisch (18) blockiert werden können, wobei der Indexschieber den Spanner (30) bei Überlast freigibt.

11. Profilbearbeitungsmaschine nach einem der vorstehenden Ansprüche, **dadurch gekennzeichnet, dass** an beiden Enden eines Verfahrweges des Werkzeugträgers (22) und/oder an beiden Seiten des Werkzeugträgers (22) jeweils ein plastisch verformbarer Crashkörper (56) vorgesehen ist.

12. Profilbearbeitungsmaschine nach einem der vorstehenden Ansprüche, **dadurch gekennzeichnet, dass** die Spanner (30) jeweils wenigstens zwei einander gegenüberliegende Spannflächen (72, 74) aufweisen, wobei Mittel vorgesehen sind, um beim Übergang vom Spannzustand zum Freigabezustand beide Spannflächen (72,74) von den Außenflächen eines zu bearbeitenden Profils zu entfernen.

13. Profilbearbeitungsmaschine nach einem der vorstehenden Ansprüche, **dadurch gekennzeichnet, dass** in Längsrichtung des Bearbeitungstisches (18) gesehen an wenigstens einem Ende des Bearbeitungstisches (18) ein Anschlag (32) für ein zu bearbeitendes Profil vorgesehen ist, wobei eine klappbare oder verschiebbare Anschlaghaube (34) vorgesehen ist, die im nicht benutzten Zustand des Anschlags (32) dessen Anschlagfläche (98) abdeckt.

14. Profilbearbeitungsmaschine nach Anspruch 13, **dadurch gekennzeichnet, dass** der Anschlag (32) um 90 Winkelgrad klappbar ausgebildet ist.

## Claims

1. Profile processing machine (10), comprising a machine frame, an elongate processing table (18) for placing a profile to be processed thereon and a tool holder (22), wherein the tool holder (22) is shiftable along the processing table (18), wherein the machine frame includes at least two mutually spaced pillars (12, 14) and at least one girder (16) connecting the two pillars (12, 14) and the processing table (18) extends between the two pillars (12, 14), and wherein the tool holder (22) has an annular shape and surrounds the processing table (18) completely as seen in the longitudinal direction of the processing table (18).

2. Profile processing machine according to claim 1, **characterized in that** the processing table (18) has a supporting surface, inclined in relation to the horizontal, for a profile to be processed.

3. Profile processing machine according to claim 2, **characterized in that** the supporting surface is inclined about an angle in the range between 15 degrees of angle and 45 degrees of angle, in particular 30 degrees of angle, in relation to the horizontal.

4. Profile processing machine according to any of the preceding claims, **characterized in that** the tool holder (22) is mounted at least on the girder (16) and on the processing table (18) to be shiftable in the longitudinal direction of the processing table (18).

5. Profile processing machine according to claim 4, **characterized in that** the tool holder (22) is shiftably mounted by means of two mutually spaced rails (23, 24) on the girder (16) and by means of one rail (25) on the processing table.

6. Profile processing machine according to any of the preceding claims, **characterized in that** the processing table (18) extends as a cantilever between the two pillars (12, 14).

7. Profile processing machine according to claim 6, **characterized in that** the processing table (18) includes at least one tubular girder (20) provided with at least one tension belt (46) in the interior thereof.

8. Profile processing machine according to any of the preceding claims, **characterized in that** a linear motor for shifting the tool holder (22) is provided.

9. Profile processing machine according to claim 8, **characterized in that** the linear motor is disposed on a bottom side of the processing table (18), which is located opposite to a supporting surface for a profile to be processed.

10. Profile processing machine according to any of the preceding claims, **characterized in that** at least two clamping fixtures (30) are provided and displaceable along the processing table (18), and **in that** the at least two clamping fixtures (30) can be blocked in relation to the processing table (18) by means of a respective index slide, wherein the index slide releases the clamping fixture (30) in case of excess load.

11. Profile processing machine according to any of the preceding claims, **characterized in that** on both ends of a traveling distance of the tool holder (22) and/or on both sides of the tool holder (22) a respective plastically deformable crash body (56) is provided.

12. Profile processing machine according to any of the preceding claims, **characterized in that** the clamping fixtures (30) each have at least two mutually opposed clamping surfaces (72, 74), wherein means are provided to remove both the clamping surfaces (72, 74) from the outer surfaces of a profile to be processed during a transition from the clamping condition to the release condition.

13. Profile processing machine according to any of the preceding claims, **characterized in that**, as seen in the longitudinal direction of the processing table (18), at least on one end of the processing table (18) an abutment stop (32) for a profile to be processed is provided, wherein a hinged or shiftable abutment cover (34) is provided, which covers the abutment surface (98) of the abutment stop (32) during the non-use condition thereof.

14. Profile processing machine according to claim 13, **characterized in that** the abutment stop (32) is configured to be foldable about 90 degrees of angle.

## Revendications

1. Machine d'usinage de profilés (10) avec un châssis de machine, une table d'usinage (18) de forme allongée, laquelle est destinée au posage d'un profilé à usiner, et avec un porte-outil (22), dans laquelle le porte-outil (22) est en mesure de coulisser le long de la table d'usinage (18), dans laquelle le châssis de machine présente au moins deux piliers d'appui (12, 14), lesquels sont espacés l'un de l'autre, et au moins un support (16) qui relie les deux piliers d'appui (12, 14) et dans laquelle la table d'usinage (18) s'étend entre les deux piliers d'appui (12, 14), et dans laquelle le porte-outil (22) est conçu de forme annulaire et enveloppe en intégralité la table d'usinage (18), vu dans la direction longitudinale de la table d'usinage (18).

2. Machine d'usinage de profilés selon la revendication 1, **caractérisée en ce que** la table d'usinage (18) présente une surface d'appui pour un profilé à usiner, laquelle est inclinée par rapport à l'horizontale.

3. Machine d'usinage de profilés selon la revendication 2, **caractérisée en ce que** la surface d'appui est inclinée par rapport à l'horizontale d'un angle compris dans une plage située entre 15 degrés d'angle et 45 degrés d'angle, en particulier 30 degrés d'angle.

4. Machine d'usinage de profilés selon l'une des revendications précédentes, **caractérisée en ce que** le porte-outil (22) est positionné, de manière à pouvoir coulisser dans la direction longitudinale de la table d'usinage (18), au moins au niveau du support (16) et au niveau de la table d'usinage (18).

5. Machine d'usinage de profilés selon la revendication 4, **caractérisée en ce que** le porte-outil (22) est positionné, de manière à pouvoir coulisser, au moyen de deux glissières (23, 24), lesquelles sont espacées l'une de l'autre au niveau du support (16), et au moyen d'une glissière (25) au niveau de la table d'usinage.

6. Machine d'usinage de profilés selon l'une des revendications précédentes, **caractérisée en ce que** la table d'usinage (18) s'étend en porte à faux entre les deux piliers d'appui (12, 14).

7. Machine d'usinage de profilés selon la revendication 6, **caractérisée en ce que** la table d'usinage (18) présente au moins un support (20) en forme de tube, lequel est pourvu d'au moins une membrure de traction (46) dans son compartiment intérieur.

8. Machine d'usinage de profilés selon l'une des revendications précédentes, **caractérisée en ce qu'**un moteur linéaire est prévu en vue du déplacement du porte-outil (22).

9. Machine d'usinage de profilés selon la revendication 8, **caractérisée en ce que** le moteur linéaire est disposé sur une face inférieure de la table d'usinage (18), laquelle se trouve à l'opposé d'une surface d'appui pour un profilé à usiner.

10. Machine d'usinage de profilés selon l'une des revendications précédentes, **caractérisée en ce que** sont prévus au moins deux tendeurs (30) pouvant être déplacés le long de la table d'usinage (18), et **en ce qu'**au moins deux tendeurs (30) peuvent être bloqués par rapport à la table d'usinage (18), au moyen de respectivement un coulisseau de tension, dans laquelle le coulisseau de tension libère le tendeur (30) en cas de surcharge.

11. Machine d'usinage de profilés selon l'une des revendications précédentes, **caractérisée en ce qu'**un corps d'écrasement (56), lequel peut être déformé plastiquement, est prévu respectivement aux deux extrémités d'une trajectoire de déplacement du porte-outil (22) et/ou au niveau de deux côtés du porte-outil (22).

12. Machine d'usinage de profilés selon l'une des revendications précédentes, **caractérisée en ce que** les tendeurs (30) présentent respectivement au moins deux surfaces de tension (72, 74), lesquelles se font face, dans laquelle des moyens sont prévus pour éloigner les deux surfaces de tension (72, 74) des surfaces extérieures d'un profilé à usiner lors du passage de l'état de tension à l'état de libération.

13. Machine d'usinage de profilés selon l'une des revendications précédentes, **caractérisée en ce que**, vue dans la direction longitudinale de la table d'usinage (18), une butée (32) est prévue pour un profilé à usiner au niveau d'au moins une extrémité de la table d'usinage (18), dans laquelle un capot de butée (34) est prévu, lequel peut être replié ou est en mesure de coulisser et lequel recouvre sa surface de butée (98) quand la butée (32) est à l'état non utilisé.

14. Machine d'usinage de profilés selon la revendication 13, **caractérisée en ce que** la butée (32) est conçue de manière à pouvoir être repliée de 90 degrés d'angle.
